# EUROPÄISCHE PATENTSCHRIFT

(11) **EP 1 629 913 B1**
(45) Veröffentlichungstag und Bekanntmachung des Hinweises auf die Patenterteilung: **31.10.2007**
(21) Anmeldenummer: 04020104.8
(22) Anmeldetag: 25.08.2004
(51) Int. Cl.: B23B 27/08, B23B 29/04

(54) **Drehmeisselhalter**
Turning tool holder
Porte-outil de tournage

(43) Veröffentlichungstag der Anmeldung: 01.03.2006
(73) Patentinhaber: Graf, Ernst, 78661 Dietingen (DE)
(72) Erfinder: Graf, Ernst, 78661 Dietingen (DE)
(74) Vertreter: Klocke, Peter

(56) Entgegenhaltungen:
- DE-C1- 10 224 127
- DE-T2- 69 323 756

## Beschreibung

Die Erfindung betrifft einen Drehmeißelhalter mit den Merkmalen des Oberbegriffs des Anspruchs 1, wobei unter Drehmeißel alle Typen von Drehwerkzeugen, insbesondere auch Drehstähle verstanden werden.

Aus der DE 693 23 756 T2 ist ein Drehmeißelhalter mit Kühlschmiermittelkanal bekannt. Der dort offenbarte Drehmeißelhalter weist einen Kühlschmiermittelkanal mit einer verstellbaren Düse an seiner werkstückseitigen Mündung auf. Die Düse ist achsenparallel zu einem spanend zu bearbeitenden Werkstück und in ihrem Winkel zu einer Horizontalen einstellbar. Dadurch ist der Kühlschmiermittelstrahl so einstellbar, dass er beim Drehen an oder oberhalb einer Schneide eines am Drehmeißelhalter befestigten Drehmeißels und in einer Radialebene zum Werkstück auf eine Oberfläche des Werkstücks trifft. Diese Ausgestaltung hat insbesondere den Vorteil, dass beim Ein- und Abstechen der Kühlschmiermittelstrahl auch bei einer tiefen Einstechnut auf den zu bearbeitenden Nutgrund und nicht seitlich der Nut auf die Oberfläche des Werkstücks trifft. Allerdings ist der bekannte Drehmeißelhalter mit seiner verstellbaren Düse aufwändig herzustellen und erfordert beim Rüsten der Drehmaschine jeweils ein Ausrichten der Düse.

Aus der DE 102 24 127 C1 ist ein Drehwerkzeughalter, insbesondere für einen Abstechstahl, bekannt, der in einer in etwa kreisförmigen Grundform ausgebildet ist und zwei Spannbacken zum Spannen des Abstechstahls aufweist, die nach Art von Backen einer Zange gegeneinander schwenkbar sind. Der offenbarte Drehwerkzeughalter ist nicht mit Vorrichtungen zum Führen, Formen oder Lenken eines Schmiermittelstrahls auf eine Schneide eines eingespannten Drehmeißels oder auf eine zu bearbeitende Oberfläche eines Werkstücks ausgestattet.

Der Erfindung liegt daher die Aufgabe zu Grunde, einen gattungsgemäßen Drehwerkzeughalter vorzuschlagen, der in etwa kreisförmig ausgebildet ist und einfache Vorrichtungen zum Kühlen und Schmieren einer Schneidstelle durch einen Kühlschmiermittelstrahl aufweist.

Diese Aufgabe wird erfindungsgemäß durch einen Drehwerkzeughalter mit den Merkmalen des Patentanspruchs 1 gelöst. Weitere vorteilhafte Ausgestaltungen sind den Unteransprüchen zu entnehmen.

Der erfindungsgemäße Halter weist zwei Spannbacken auf, die nach Art von Backen einer Zange ausgebildet und auf der Stirnseite eines in etwa kreisförmigen Grundteils angeordnet sind. Des Weiteren weist der Halter ein Schwenkgelenk auf, mit dem die beiden Spannbacken nach Art von Backen einer Zange schwenkbar miteinander verbunden sind. Mit einer Spanneinrichtung sind die beiden Spannbacken so zueinander schwenkbar, dass sie ein zwischen ihnen befindliches Drehwerkzeug festspannen. Das Schwenkgelenk befindet sich zwischen der Spanneinrichtung und einer Einspannstelle, an der sich ein in dem Halter eingespanntes Drehwerkzeug befindet. Die beiden Spannbacken weisen gemeinsam eine in etwa kreisrunde Form auf. Erfindungsgemäß ist in einer der beiden Spannbacken die Mündung eines Kühlschmiermittelkanals angeordnet, wobei der Kühlschmiermittelkanal entweder ganz oder zumindest über einen Teil seiner Länge in der Spannbacke verläuft. Der erfindungsgemäße Drehwerkzeughalter weist keine verstellbare Düse auf. Die Mündung des Kühlschmiermittelkanals des erfindungsgemäßen Drehwerkzeughalters ist so angeordnet und ausgerichtet, dass ein Kühlschmiermittelstrahl an oder über einer Schneide eines am Drehwerkzeughalter befestigten Drehmeißels auf eine spanend zu bearbeitende Oberfläche eines Werkstücks trifft. Üblicherweise werden Drehwerkzeughalter für bestimmte Drehwerkzeuge ausgebildet und nur für diese verwendet, so dass sich die Schneide des Drehwerkzeugs immer an einer fest vorgegebenen Stelle in Bezug auf die Mittelachse des Drehwerkzeughalters befindet. Somit ist es möglich, mit einer in ihrer Richtung nicht veränderbaren Mündung des Kühlschmiermittelkanals den Kühlschmiermittelstrahl so zu lenken, dass dieser beim Drehen zumindest näherungsweise die feste Position der Schneide des Drehmeißels trifft. Weiterer Vorteil der erfindungsgemäßen Anordnung des Kühlschmiermittelkanals in einer der beiden Spannbacken des Drehwerkzeughalters ist, dass sich der Kühlschmiermittelstrahl in einer Ebene mit der Spannbacke befindet. Beim Abstechen spritzt der Strahl dadurch in eine Abstechnut im Werkstück und nicht seitlich daneben auf eine Werkstückoberfläche.

Eine vorteilhafte Ausgestaltung der Erfindung sieht vor, dass der Kühlschmiermittelkanal in der Spannbacke durch eine Nut gebildet wird, die an der dem Grundteil zugewandten Stirnfläche der Spannbacke angeordnet ist. Liegt die Spannbacke an der zugeordneten Stirnfläche des Grundteils an, so wird die Nut durch die Stirnfläche abgedeckt und der Kühlschmiermittelkanal gebildet. In einer weiteren erfindungsgemäßen Ausgestaltung wird der Kühlschmiermittelkanal durch einen Schlitz in der Spannbacke gebildet, der auf der einen Seite durch die Stirnfläche des Grundteils und auf der anderen Seite durch eine Abdeckplatte abgedeckt ist. Der Kühlschmiermittelkanal lässt sich so durch einfache Ausfräsungen an beliebiger Stelle der Spannbacke einfach und preisgünstig herstellen. Im gleichen Zuge kann die Mündung des Kühlschmiermittelkanals ausgebildet werden.

Zweckmäßigerweise liegt die Mündung des Kühlschmiermittelkanals der Spannfläche des Drehmeißels in etwa diametral gegenüber. Die Mündung des Kühlschmiermittelkanals ist dabei so ausgerichtet, dass der austretende Kühlschmiermittelstrahl parallel zur Stirnfläche des Grundteils verläuft und in der Ebene der Spannbacken am Drehmeißel auftrifft. Die Mündung des Kühlschmiermittelkanals ist so zu formen, dass sich der Kühlschmiermittelstrahl möglichst wenig aufweitet.

Eine weitere Ausgestaltung der Erfindung sieht vor, dass das Kühlschmiermittel in einen im Grundteil beginnenden Kühlschmiermittelkanal eingespeist und zum in der Spannbacke verlaufenden Kühlschmiermittelkanal weitergeleitet wird. Dazu weist der in der Spannbacke verlaufende Teil der Schmiermittelkanals an seinem der Mündung gegenüberliegenden Ende eine Erweiterung auf, in welche der Kühlschmiermittelkanal des Grundteils mündet. Der Kühlschmiermittelkanal des Grundteils lässt sich als eine oder mehrere, sich winklig fortsetzende Bohrungen herstellen und mündet senkrecht aus der der Spannbacke zugewandten Stirnfläche des Grundteils in den Kühlschmiermittelkanal in der Spannbacke oder in die Erweiterung des Kühlschmiermittelkanals.

Nachfolgend wird die Erfindung anhand eines in der Zeichnung dargestellten Ausführungsbeispiels näher erläutert. Es zeigen:
- Figur 1: eine Seitenansicht eines Ausführungsbeispiels eines erfindungsgemäßen Drehwerkzeughalters;
- Figur 2: eine Stirnansicht des Drehwerkzeughalters aus Figur 1 ohne Abdeckplatte; und
- Figur 3: zwei Spannbacken des Drehwerkzeughalters aus Figuren 1 und 2 mit einem Drehmeißel in größerer Darstellung.

Der in den Zeichnungen dargestellte erfindungsgemäße Drehwerkzeughalter 1 ist zum Spannen eines Drehwerkzeugs (Drehmeißel) 5 auf einer nicht dargestellten Drehmaschine vorgesehen. Im dargestellten und beschriebenen Ausführungsbeispiel der Erfindung ist der Drehmeißel 5 eine Abstechstahl. Der Drehwerkzeughalter 1 weist ein plattenförmiges Grundteil 2 auf, das in Seitenansicht in etwa die Form eines Kreises mit einer an einer Stelle des Umfangs abstehenden Befestigungseinrichtung 18 aufweist. Die Befestigungseinrichtung 18 weist in Draufsicht auf den Drehwerkzeughalter 1 die Form einer U-förmigen Profilschiene auf. Die Befestigungseinrichtung 18 ist einstückiger Bestandteil des Grundteils 2. Sie steht auf einer Stirnseite des Grundteils 2 über und ist mit der anderen Stirnseite des Grundteils 2 bündig. Die Befestigungseinrichtung 18 dient zum Anbringen des Drehwerkzeughalters 1 an einer Drehmaschine. Auf einer der Befestigungseinrichtung 18 gegenüberliegenden Umfangsstelle weist das Grundteil 2 eine kreisbogenförmige Aussparung 20 auf, in deren Bereich sich der Drehmeißel 5 befindet.

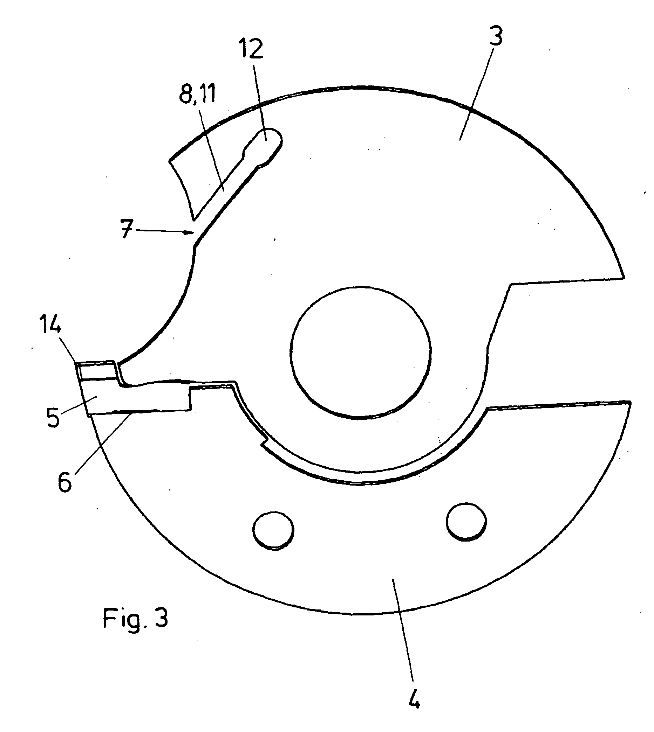

An derjenigen Stirnseite des Grundteils 2, mit der die Befestigungseinrichtung 18 bündig ist, sind zwei Spannbacken 3, 4 angebracht. Die beiden Spannbacken 3, 4 sind in Figur 3 noch einmal extra, also ohne das Grundteil 2, und mit dem Drehmeißel 5 dargestellt. Beide Spannbacken 3, 4 sind ebene, flächenförmige Teile, sie sind so schmal wie der Drehmeißel (Abstechstahl) 5. Eine der beiden Spannbacken 4 ist feststehend, sie ist mit dem Grundteil 2 des Drehwerkzeughalters 1 mit zwei Schrauben 17 verschraubt. Diese Spannbacke 4 bildet eine Stützbacke 4 und wird nachfolgend zur Unterscheidung von der anderen Spannbacke 3 auch als Stützbacke 4 bezeichnet werden. Die Stützbacke 4 weist in Seitenansicht die Form eine Kreisbogens auf, der sich in Umfangsrichtung um etwas weniger als einen Halbkreis erstreckt. Im Bereich der kreisförmigen Aussparung 20 des Grundteils 2 des Drehwerkzeughalters 1 weist die Stützbacke 4 eine stufenförmige Ausnehmung 19 auf, in der der Drehmeißel 5 passgenau einliegt. Die Stützbacke 4 ist so am Drehwerkzeughalter 1 angeordnet, dass eine beim Drehen von einem nicht dargestellten Werkstück auf den Drehmeißel 5 ausgeübte Kraft den Drehmeißel 5 gegen die feststehende Stützbacke 4 drückt.

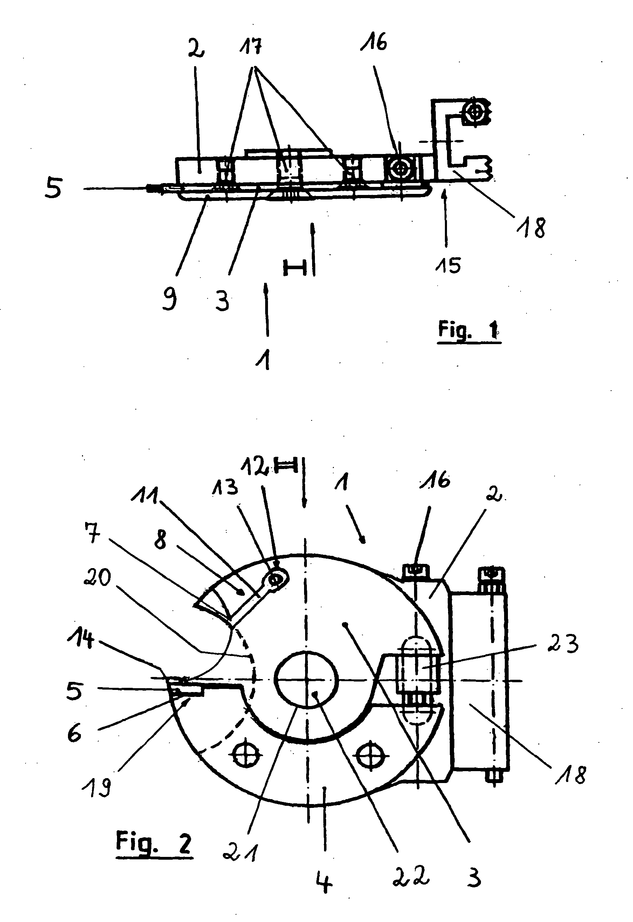

Die andere Spannbacke 3, die nachfolgend zur Unterscheidung von der Stützbacke 4 auch als bewegliche Spannbacke 3 bezeichnet werden wird, hat in Seitenansicht näherungsweise die Form eines Halbkreises, wobei sie ein Zentrum des Grundteils 2 mit einer kreisbogenförmigen Auswölbung umfasst. Gemeinsam ergänzen sich die beiden Spannbacken 3, 4 in etwa zu einer Kreisform. Die bewegliche Spannbacke 3 weist ein Loch 21 auf, mit dem sie schwenkbar auf einem kreisrunden Zapfen 22 gelagert ist, der mit dem Grundteil 2 verschraubt ist. Der Zapfen 22 steht um etwas mehr als eine Dicke der beweglichen Spannbacke 3 über die Stirnseite des Grundteils 2 vor. Eine aufgeschraubte Abdeckplatte 9 hält die bewegliche Spannbacke 3 am Grundteil 2. Die Abdeckplatte 9 ist in Figur 1 nicht gezeichnet damit die Spannbacken 3, 4 sichtbar sind. Der Zapfen 22 bildet mit dem Loch 21 ein Schwenkgelenk für die bewegliche Spannbacke 3, das sich im Zentrum der beiden einander zu in etwa einem Kreis ergänzenden Spannbacken 3, 4 befindet. Durch das Schwenkgelenk 21, 22 sind die beiden Spannbacken 3, 4 nach Art von Backen einer Zange schwenkbar miteinander verbunden, wobei nur die bewegliche Spannbacke 3 gegenüber dem Grundteil 2 des Drehwerkzeughalter 1 schwenkbar ist.

Die beiden Spannbacken 3, 4 befinden sich zwischen der Abdeckplatte 3 und dem Grundteil 2 des Drehwerkzeughalters 1. Die Abdeckplatte 9 und das Grundteil 2 bilden zwei seitliche Abstützungen 2, 9 für die beiden Spannbacken 3, 4 und für ein in den Drehwerkzeughalter 1 eingespannten Drehmeißel 5.

Zum Festspannen des Drehmeißels 5 zwischen den Spannbacken 3, 4 weist der erfindungsgemäße Drehmeißelhalter 1 eine Spanneinrichtung auf. Die Spanneinrichtung umfasst einen Kulissenstein 23, der verschieblich geführt ist und eine Spannschraube 16 zum Verschieben des Kulissensteins 23. Die Spannschraube 16 bildet ein Schraubtrieb für den Kulissenstein 23. Durch Drehen der Spannschraube 16 in einer Spannrichtung wird der Kulissenstein 23 in Anlage an die bewegliche Spannbacke 3 verschoben und verschwenkt diese so, dass der Drehmeißel 5 zwischen den beiden Spannbacken 3, 4 festgespannt wird. Bezüglich des Schwenkgelenks 21, 22 der beweglichen Spannbacke 3 ist die Spanneinrichtung dem Drehmeißel 5 gegenüberliegend am Drehwerkzeughalter 1 angeordnet.

Figur 2 zeigt eine Stirnansicht des in Figur 1 dargestellten Drehwerkzeughalter 1, wobei die Abdeckplatte 9 und die Schrauben 17 nicht dargestellt sind. Die beiden Spannbacken 3, 4 weisen gemeinsam eine in etwa kreisrunde Form auf. Durch die Spannbacken 3 und 4, die an einer Stirnfläche des Grundteils 2 schwenkbar gelagert sind, wird der Drehmeißel 5 an einer Spannfläche 6 der Stützbacke 4 gespannt. In der beweglichen Spannbacke 3 verläuft ein Kühlschmiermittelkanal 8 mit einer Mündung 7. Die Mündung 7 des Kühlschmiermittelkanals 8 befindet sich in einem dem Drehmeißel 5 zugewandten Rand der beweglichen Spannbacke3. Der Rand erstreckt sich konkav in Verlängerung einer Spanfläche des Drehmeißels 5. Der Kühlschmiermittelkanal 8 und seine Mündung 7 sind so angeordnet und ausgerichtet, dass ein Kühlschmiermittelstrahl an oder über einer Schneide 14 des im Drehwerkzeughalter 1 eingespannten Drehmeißels 5 auf eine spanend zu bearbeitende Oberfläche eines nicht dargestellten Werkstücks trifft. Die Schneide 14 des im Drehwerkzeughalter 1 eingespannten Drehmeißels 5 befindet sich immer an einer fest vorgegebenen Stelle in Bezug auf den Drehwerkzeughalter 1.

Der Kühlschmiermittelkanal 8 in der beweglichen Spannbacke 3 ist in Richtung der Schneide 14 des Drehmeißels 5 ausgerichtet und durchbricht deren Umriss auf der dem Drehmeißel 5 zugewandten Seite. Der Kühlschmiermittelkanal 8 und seine Mündung 7 weisen keine beweglichen Teile auf und sind in ihrer Richtung nicht veränderbar. Sie lenken einen Kühlschmiermittelstrahl beim Drehen auf oder über die Schneide 14 des Drehmeißels 5

Die Mündung 7 des Kühlschmiermittelkanals 8 liegt der Spannfläche 6 des Drehmeißels 5 in etwa diametral gegenüber. Die Mündung 7 des Kühlschmiermittelkanals 8 ist dabei so ausgerichtet, dass der austretende Kühlschmiermittelstrahl parallel zur Stirnfläche 15 des Grundteils 2 verläuft und in der Ebene der Spannbacken 3 am Drehmeißel 5 auftrifft.

Der Kühlschmiermittelkanal 8 der Spannbacke 3 des Drehwerkzeughalters 1 liegt in einer Ebene mit den Spannbacken 3 und 4 und dem Drehmeißel 5. Der Kühlschmiermittelkanal 8 in der Spannbacke 3 wird durch einen Schlitz 11 in der beweglichen Spannbacke 3 gebildet. Der Schlitz 11 wird auf der dem Grundteil 2 zugewandten Stirnfläche der Spannbacke 3 durch die Stirnfläche 15 des Grundteils 2 und auf der gegenüberliegenden Seite durch die Stirnfläche der Abdeckplatte 9 abgedeckt und so der Kühlschmiermittelkanal gebildet.

Im Grundteil 2 ist der Kühlschmiermittelkanal mit 13 bezeichnet, er ist als abgewinkelte Bohrung ausgeführt und verläuft parallel zur Stirnfläche 15, bevor er nach einer Abwinklung senkrecht aus der Stirnfläche 15 Grundteil 2 aus- und in den Kühlschmiermittelkanal 8 in der beweglichen Spannbacke 3 übertritt. Der Kühlschmiermittelkanal 8 weist an seinem der Mündung 7 abgewandten Ende eine Erweiterung 12 auf, in die der Kühlschmiermittelkanal 13 aus dem Grundteil 2 mündet. Durch die Erweiterung 12 ist eine Toleranz gewährleistet wenn die Abschnitte des Kühlschmiermittelkanals 8, 13 im Grundteil 2 und in der beweglichen Spannbacke 3 radial oder in Umfangsrichtung zueinander versetzt sind.

## Patentansprüche

1. Drehwerkzeughalter (1), mit einer Spanneinrichtung zum Spannen eines Drehmeißels (5) und mit einem Kühlschmiermittelkanal (8) ohne verstellbare Düse, dessen Mündung (7) so angeordnet und ausgerichtet ist, dass ein Kühlschmiermittelstrahl an oder über einer Schneide (14) eines am Drehwerkzeughalter (1) eingespannten Drehmeißels (5) auf eine spanend zu bearbeitende Oberfläche eines Werkstücks trifft, **gekennzeichnet durch** eine in etwa kreisförmige Grundform des Drehwerkzeughalters (1) und zwei, an einer Stirnseite (15) eines in etwa kreisförmigen Grundteils (2) des Drehwerkzeughalters (1) angeordnete, flächige, in etwa halbkreisförmige, korrespondierende Spannbacken (3, 4) zum Spannen des Drehmeißels (5), wobei die Mündung (7) des Kühlschmiermittelkanals (8) in einer der beiden Spannbacken (3) angeordnet ist und der Kühlschmiermittelkanal (8) zumindest über einen Teil seiner Länge in einer der beiden Spannbacken (3) verläuft.

2. Drehwerkzeughalter nach Anspruch 1, **dadurch gekennzeichnet, dass** der Kühlschmiermittelkanal (8) durch eine Nut gebildet ist, die in einer dem Grundteil (2) zugewandten Stirnfläche der Spannbacke (3) angebracht ist.

3. Drehwerkzeughalter nach Anspruch 1, **dadurch gekennzeichnet, dass** der Kühlschmiermittelkanal (8) durch einen Schlitz (11) in der Spannbacke (3) gebildet ist, der auf der einen Seite durch die Stirnfläche (15) des Grundteils (2) und auf der anderen Seite durch eine Abdeckplatte (9) abgedeckt ist.

4. Drehwerkzeughalter nach Anspruch 1, **dadurch gekennzeichnet, dass** die Mündung (7) des Kühlschmiermittelkanals (8) der Spannfläche (6) des Drehmeißels (5) in etwa diametral gegenüberliegt.

5. Drehwerkzeughalter nach Anspruch 2 oder Anspruch 3, **dadurch gekennzeichnet, dass** der in der Spannbacke (3) verlaufende Kühlschmiermittelkanal (8) an dem der Mündung (7) gegenüberliegenden Ende eine Erweiterung (12) aufweist, in welche der Kühlschmiermittelkanal (13) aus dem Grundteil (2) mündet.

6. Drehwerkzeughalter nach einem der vorgenannten Ansprüche, **dadurch gekennzeichnet, dass** die Mündung (7) des Kühlschmiermittelkanals (8) so ausgerichtet ist, dass der austretende Kühlschmiermittelstrahl parallel zur Stirnfläche (15) des Grundteils (8) verläuft und in der Ebene der Spannbacken (3, 4) am Drehmeißel (5) auftritt.

## Claims

1. Rotary tool holder (1), having a clamping device for clamping a cutting or turning tool (5) and a cooling lubricant duct (8) with no adjustable nozzle, the opening (7) of the said cooling lubricant duct being disposed and aligned such that a jet of cooling lubricant runs on or over an edge (14) of a turning or cutting tool (5) clamped at the rotary tool holder (1) onto a surface of a workpiece that is to be machined, **characterised by** a substantially circular basic form of the rotary tool holder (1) and two corresponding clamping jaws (3, 4), which are disposed on an end side (15) of a substantially circular basic part (2) of the rotary tool holder (1), are planar and substantially semicircular, for clamping the cutting or turning tool (5), wherein the opening (7) of the cooling lubricant duct (8) is disposed in one of the two clamping jaws (3) and the cooling lubricant duct (8) extends, at least over a part of its length, in one of the two clamping jaws (3).

2. Rotary tool holder according to claim 1, **characterised in that** the cooling lubricant duct (8) is formed by a groove, which is mounted in an end face of the clamping jaw (3) facing the basic part (2).

3. Rotary tool holder according to claim 1, **characterised in that** the cooling lubricant duct (8) is formed by a slot (11) in the clamping jaw (3), the said slot being covered on the one side by the end face (15) of the basic part (2) and on the other side by a cover plate (9).

4. Rotary tool holder according to claim 1, **characterised in that** the opening (7) of the cooling lubricant duct (8) lies opposite the clamping face (6) of the cutting or turning tool (5) in a substantially diametrical manner.

5. Rotary tool holder according to claim 2 or claim 3, **characterised in that** the cooling lubricant duct (8) that extends in the clamping jaw (3) includes an extension (12) on the end situated opposite to the opening (7), into which extension the cooling lubricant duct (8) from the basic part (2) opens out.

6. Rotary tool holder according to one of the preceding claims, **characterised in that** the opening (7) of the cooling lubricant duct (8) is aligned such that the jet of cooling lubricant emitted extends parallel to the end face (15) of the basic part (8) and contacts the cutting or turning tool (5) in the plane of the clamping jaws (3, 4).

## Revendications

1. Porte-outil de tournage (1) comprenant un dispositif de serrage pour serrer un outil de tournage (5) et un conduit d'agent lubrifiant refroidissant (8) exempt de buse réglable, dont l'ouverture (7) est disposée et orientée de telle manière qu'un jet d'agent lubrifiant refroidissant projeté sur ou au-dessus d'un tranchant (14) d'un outil de tournage (5) immobilisé par le porte-outil de tournage (1) atteint une surface d'une pièce à usiner par enlèvement de copeaux, **caractérisé par** une forme de base approximativement circulaire du porte-outil de tournage (1) et par deux mâchoires de serrage (3, 4) surfaciques complémentaires, à peu près semi-circulaires, disposées sur une face frontale (15) d'une partie de base (2) approximativement semi-circulaire du porte-outil de tournage (1), qui sont destinées à immobiliser l'outil de tournage (5), l'ouverture (7) du conduit d'agent lubrifiant refroidissant (8) se situant dans l'une des deux mâchoires de serrage (3) et le conduit d'agent lubrifiant refroidissant (8) s'étendant au moins sur une partie de sa longueur dans l'une des deux mâchoires de serrage (3).

2. Porte-outil de tournage selon la revendication 1, **caractérisé en ce que** le conduit d'agent lubrifiant refroidissant (8) est formé par une gorge ménagée dans une surface frontale de la mâchoire de serrage (3) qui est tournée vers la partie de base (2).

3. Porte-outil de tournage selon la revendication 1, **caractérisé en ce que** le conduit d'agent lubrifiant refroidissant (8) est formé par une fente (11) dans la mâchoire de serrage (3), laquelle est recouverte d'un côté par la surface frontale (15) de la partie de base (2) et de l'autre côté par une plaquette de recouvrement (9).

4. Porte-outil de tournage selon la revendication 1, **caractérisé en ce que** l'ouverture (7) du conduit d'agent lubrifiant refroidissant (8) est approximativement diamétralement opposée à la surface de serrage (6) de l'outil de tournage (5).

5. Porte-outil de tournage selon la revendication 2 ou la revendication 3, **caractérisé en ce que** le conduit d'agent lubrifiant refroidissant (8) s'étendant dans la mâchoire de serrage (3) présente au niveau de l'extrémité opposée à l'ouverture (7) un élargissement (12) dans lequel débouche le conduit d'agent lubrifiant refroidissant (13) sortant de la partie de base (2).

6. Porte-outil de tournage selon l'une des revendications précédentes, **caractérisé en ce que** l'ouverture (7) du conduit d'agent lubrifiant refroidissant (8) est orientée de telle manière que le jet d'agent lubrifiant refroidissant qui en sort s'étend parallèlement à la surface frontale (15) de la partie de base (2) et atteint l'outil de tournage (5) dans le plan des mâchoires de serrage (3, 4).
